# EUROPEAN PATENT SPECIFICATION

(11) **EP 3 012 798 B1**
(45) Date of publication and mention of the grant of the patent: **05.06.2019**
(21) Application number: 15165628.7
(22) Date of filing: 29.04.2015
(51) Int. Cl.: G06Q 50/00

(54) **SOCIAL SCORES FOR NETWORK ELEMENTS**
SOZIALE BEWERTUNG FÜR NETZWERKELEMENTE
SCORES SOCIAUX POUR ÉLÉMENTS DE RÉSEAU

(30) Priority: 22.10.2014 US 201414521269; 23.10.2014 WO PCT/US2014/061882
(43) Date of publication of application: 27.04.2016
(73) Proprietor: Facebook, Inc., Menlo Park, CA 94025 (US)
(72) Inventor: Krishnamurthy, Rajiv Jayanth, Menlo Park, CA California 94025 (US)
(74) Representative: Schröer, Gernot H.

(56) References cited:
- WO-A1-2009/026395
- WO-A1-2011/002588
- CN-A- 103 944 917
- US-A- 4 870 408
- US-A1- 2005 068 922
- US-A1- 2010 185 630
- US-A1- 2012 011 201
- US-A1- 2012 166 532
- US-A1- 2012 233 009
- US-A1- 2013 085 877
- US-A1- 2014 229 609
- Wikipedia: "Transmission Control Protocol - Wikipedia", , 17 September 2014 (2014-09-17), XP055343717, Retrieved from the Internet: URL:https://en.wikipedia.org/w/index.php?t itle=Transmission_Control_Protocol&oldid=6 26010337 [retrieved on 2017-02-08]
- Wikipedia: "Multitier architecture - Wikipedia", , 7 July 2014 (2014-07-07), XP055446104, Retrieved from the Internet: URL:https://en.wikipedia.org/w/index.php?t itle=Multitier_architecture&oldid=61592236 3 [retrieved on 2018-01-30]
- W3.Org: "Professional Report", , 29 July 2001 (2001-07-29), XP055446141, Retrieved from the Internet: URL:https://web.archive.org/web/2001072902 2523/https://www.w3.org/AudioVideo/9610_Wo rkshop/paper14/paper14.html [retrieved on 2018-01-30]

## Description

### TECHNICAL FIELD

This disclosure generally relates to providing content using a content distribution network, in particular to a method, one or more computer-readable non-transitory storage media embodying software, a system and a computer program product.

### BACKGROUND

Conventionally, content may be distributed from a content provider's system to end-user devices at the edges of a network by using intermediary elements of one or more hierarchical network architectures such as, by way of example and not limitation, cell network base stations, routers, switches, hubs, servers, firewalls, gateways, cable modem termination system, cable modem, Wi-Fi router, etc. In order to speed up distribution of content to the edges of the network, content may be proactively cached at one or more intermediary network elements in anticipation of requests for such content.

A social-networking system, which may include a social-networking website, may be connected to the network and enable its users (such as persons or organizations) to interact with it and with each other through it. The social-networking system may, with input from a user, create and store in the social-networking system a user profile associated with the user. The social-networking system may also, with input from a user, create and store a record of relationships of the user with other users of the social-networking system, as well as provide services (e.g., wall posts, photo-sharing, event organization, messaging, games, or advertisements) to facilitate social interaction between or among users. In addition, the social-networking system may allow one user to connect and communicate with other users associated with the social-networking system.

WO 2011/002588 A1 discloses a method for gathering information about connections in a social networking service, comprising maintaining in a database a plurality of nodes of a social graph, where at least some of the nodes represent users of the social networking service. Each connection represents a connection between two or more nodes in the social graph and the information about the plurality of connections comprises affinity scores. Posted content items from a user of the social networking service include a link referencing a node of the social graph other than a node of the posting user. Information about the connection between the node of the posting user and the node referenced in the posted content item is stored in a database and based at least in part on the posted content item.

Oracle Corp., "The Edge Server. A Proposal for Internet Media Servers", 29 July 2001, retrieved from the Internet < URL: https://web.archive.org/web/20010729022523/- https://www.w3.org/AudioVideo/9610_Workshop/paper14/paper14.html> discloses an Edge Server, which caches and/or mirrors multimedia content otherwise stored on the WWW (WorldWide Web). In the Edge Server, multimedia data is replicated at the edge of the WWW, where the user's connection terminates at the POP (Point Of Presence). Caching algorithms update edge servers after a user touches a URL (Uniform Resource Locator).

### SUMMARY OF PARTICULAR EMBODIMENTS

This disclosure generally relates to calculating a social affinity score between two network elements based on social-networking system users being serviced by each network element in order to more efficiently predict and allocate resources for the transmission of data to the users. The social affinity score for two network elements associated with a plurality of users is used to pre-fetch data to certain network elements when specific content is uploaded to the social-networking system. In addition, the social affinity score for the network elements may be used to allocate resources for establishing and maintaining connections in anticipation of particular data transfers that will likely occur.

The invention is defined in claims 1, 6, 7 and 8. The method includes identifying one or more first users of a social-networking system, the first users receiving and transmitting data by a first network element, and identifying one or more second users of the social-networking system, the second users receiving and transmitting data by a second network element. A network element may include, for example, a Wi-Fi router, a cell tower base station, routers, switches, hubs, servers, firewalls, gateways, cable modem termination system, cable modem, etc., or other end nodes or intermediary nodes. The method includes retrieving social graph information for each of the first users and for each of the second users, and calculating a collective social affinity score between the first network element and the second network element based at least in part on individual social affinity scores between the first users and the second users. The method then takes action, based on the collective social affinity score, to handle content transmissions involving the first users and the second users.

The method includes receiving, at the first network element, information associated with one of the first users, and determining, based on the collective social affinity score, to pre-fetch the information to the second network element.

In particular embodiments, the action taken based on the collective social affinity score includes establishing a pool of TCP connections in anticipation of peak periods when the collective social affinity score is high.

The embodiments disclosed above are only examples, and the scope of this disclosure is not limited to them. Particular embodiments may include all, some, or none of the components, elements, features, functions, operations, or steps of the embodiments disclosed above.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

According to the invention, the method comprises:
identifying one or more first users of a social-networking system, wherein the first users are associated with client devices that receive and transmit data by a first network element;
retrieving social graph information for each of the first users, wherein the social graph information for each of the first users comprises (1) a social affinity score for each relationship between the first user and a social-graph connection of the first user and (2) an identification of one or more second network elements to which a client system of at least one of the social-graph connections is connected;
identifying one or more pairs of network elements based on the retrieved social graph information, wherein each of the pairs comprises the first network element and the at least one second network element;
calculating a collective social affinity score for each of the pairs of network elements, wherein the collective social affinity score is calculated based at least in part on the social affinity scores for a plurality of user pairs between the first users and social-graph connections of the first users; and
taking action, based on the collective social affinity score, to handle data transmissions involving the first users and the second users.

The calculating the collective social affinity score for a pair of network elements may comprise:
determining a set of user pairs, wherein for each of the user pairs, a client system of a first user of the user pair is connected to a first network element of the pair of network elements and a client system of a second user of the user pair is connected to a second network element of the pair of network elements; and
determining an average of the social affinity scores for each of the user pairs in the set.

The average of the social affinity scores may comprise a weighted average.

The taking action to handle data transmissions further comprises:
receiving, at a first network element of one of the identified pairs of network elements, a transmission of data by a client device connected to the first network element; and
sending a notification to the second and third network elements about the data transmission.

In an embodiment according to the invention, the method further may comprises:
receiving the notification at the second network element, and
pre-fetching the data transmission.

In an embodiment according to the invention, the method further may comprise:
receiving the notification at the second network element, and
establishing a pool of TCP connections in anticipation of peak periods when the collective social affinity score is high .

The calculating the collective social affinity score may take place on a regular and continual basis.

The network elements comprise a Wi-Fi router
or a cell tower base station.

The one or more computer-readable non-transitory storage media embody software that is operable when executed by one or more processors to:
identify one or more first users of a social-networking system, wherein the first users are associated with client devices that receive and transmit data by a first network element;
retrieve social graph information for each of the first users, wherein the social graph information for each of the first users comprises (1) a social affinity score for each relationship between the first user and a social-graph connection of the first user and (2) an identification of one or more second network elements to which a client system of at least one of the social-graph connections is connected;
identify one or more pairs of network elements based on the retrieved social graph information, wherein each of the pairs comprises the first network element and the at least one second network element;
calculate a collective social affinity score for each of the pairs of network elements, wherein the collective social affinity score is calculated based at least in part on the social affinity scores for a plurality of user pairs between the first users and social-graph connections of the first users; and
take action, based on the collective social affinity score, to handle data transmissions involving the first users and the second users.

The software operable to calculate the collective social affinity score may comprise software operable to:
determine a set of user pairs, wherein for each of the user pairs, a client system of a first user of the user pair is connected to a first network element of the pair of network elements and a client system of a second user of the user pair is connected to a second network element of the pair of network elements; and
determine an average of the social affinity scores for each of the user pairs in the set.

The software operable to take action to handle data transmissions further comprises software operable to:
receive, at a first network element of one of the identified pairs of network elements, a transmission of data by a client device connected to the first network element; and
send a notification to the second and third network elements about the data transmission.

The software may further be operable to:
receive the notification at the second network element; and
pre-fetch the data transmission.

The software operable to take action to handle data transmissions may further comprise software operable to:
receive the notification at the second network element; and
establish a pool of TCP connections in anticipation of peak periods when the collective social affinity score is high.

According to the invention, the system comprises:
one or more processors; and
   a memory coupled to the processors comprising instructions executable by the processors, the processors operable when executing the instructions to:
identify one or more first users of a social-networking system, wherein the first users are associated with client devices that receive and transmit data by a first network element;
retrieve social graph information for each of the first users, wherein the social graph information for each of the first users comprises (1) a social affinity score for each relationship between the first user and a social-graph connection of the first user and (2) an identification of one or more second network elements to which a client system of at least one of the social-graph connections is connected;
identify one or more pairs of network elements based on the retrieved social graph information, wherein each of the pairs comprises the first network element and the at least one second network element;
calculate a collective social affinity score for each of the pairs of network elements, wherein the collective social affinity score is calculated based at least in part on the social affinity scores for a plurality of user pairs between the first users and social-graph connections of the first users; and
take action, based on the collective social affinity score, to handle data transmissions involving the first users and the second users.

The processors being operable to calculate of the collective social affinity score comprises the processors being operable to:
determine a set of user pairs, wherein for each of the user pairs, a client system of a first user of the user pair is connected to a first network element of the pair of network elements and a client system of a second user of the user pair is connected to a second network element of the pair of network elements; and
determine an average of the social affinity scores for each of the user pairs in the set.

The processors being operable to take action to handle data transmissions further comprises the processors being operable to:
receive, at a first network element of one of the identified pairs of network elements, a transmission of data by a client device connected to the first network element; and
send a notification to the second network elements in the identified pairs of network elements about the data transmission.

The processors being operable to take action to handle data transmissions further may comprise the processors being operable to:
receive the notification at the second network element; and
establish a pool of TCP connections in anticipation of peak periods when the collective social affinity score is high.

According to the invention, one or more computer-readable non-transitory storage media embody software that is operable when executed to perform a method according to the invention.

According to the invention, a system comprises: one or more processors; and at least one memory coupled to the processors and comprising instructions executable by the processors, the processors operable when executing the instructions to perform a method according to the invention.

According to the invention, a computer program product, preferably comprising a computer-readable non-transitory storage media, is operable when executed on a data processing system to perform a method according to the invention.

### BRIEF DESCRIPTION OF THE DRAWINGS

- FIG. 1A: illustrates an example network environment associated with a social-networking system.
- FIG. 1B: illustrates an example network architecture for content distribution.
- FIG. 2A: illustrates an example wide area network comprising a plurality of network elements.
- FIG. 2B: illustrates a specific example of a wide area network comprising two network elements and associated users.
- FIG. 3: illustrates an example social graph.
- FIG. 4: illustrates an example method for computing social scores for network elements.
- FIG. 5: illustrates an example computer system.

### DESCRIPTION OF EXAMPLE EMBODIMENTS

In particular embodiments, one or more client systems (each associated with a user of a social-networking system) may be connected to a first network element (e.g., a Wi-Fi router or a base station of a cell tower) in a content distribution network. Content uploaded by a client system connected to a second network element that is to be distributed to one or more of the client systems connected to the first network element may be selectively pre-fetched to the first network element if a collective social affinity score calculated as between the two network elements exceeds a minimum threshold (in anticipation of receiving a request for such content from one or more of the devices connected to the first network element). Examples of such content and/or data may be included in, by way of example and not limitation: targeted communications (e.g., email, SMS), client system-initiated multicast/broadcast communications (e.g., a social-networking profile status update or check-in, a blog post), or third-party-initiated communications (e.g., targeted advertisements/coupons/incentives, notifications, sponsored content). Each network element may connect with a plurality of client systems, and each client system may be associated with a user of the social-networking system.

The collective social affinity score may be calculated as an average of multiple individual social affinity scores, where each individual social affinity score is calculated with respect to the social-graph relationship between each pair of users (as determined by the social-networking system) in the overall set of user pairs. Each pair of users in the overall set includes one user whose client system is connected to the first network element and one user whose client system is connected to the second network element; the overall set of user pairs may comprise all possible user-pairing combinations based on the users whose client systems are currently connected to the two network elements.

In particular embodiments, when the collective social affinity score for the two network elements exceeds a minimum threshold, resources (e.g., TCP connections, memory, cloud-computing resources, data storage space) for handling requests may be proactively allocated in anticipation of an increase in demand for such resources, given the high collective social affinity score (which correspondingly indicates a likelihood of communication between devices connected to the two network elements and/or common transmission of content to the devices connected to the two network elements).

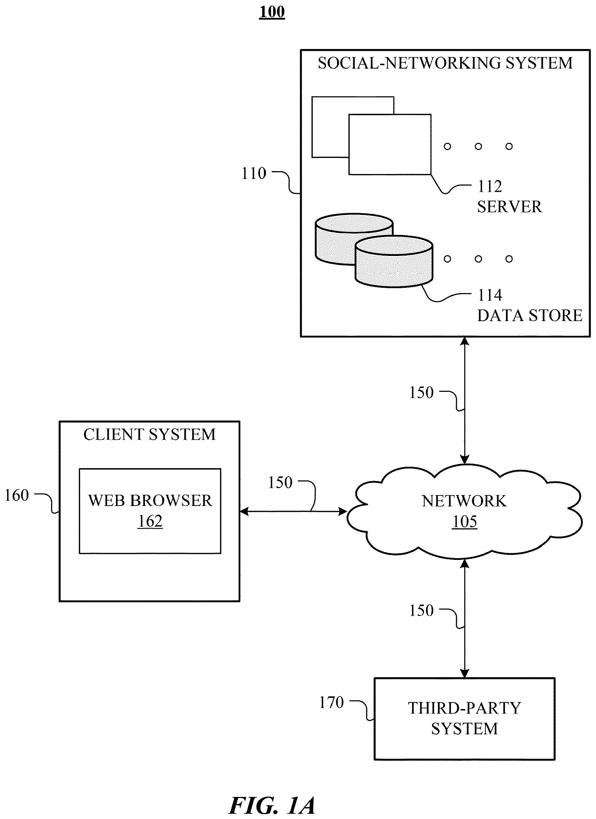

**FIG. 1A** illustrates an example network environment 100 associated with a social-networking system. Network environment 100 includes a client system 160, a social-networking system 110, and a third-party system 170 connected to each other by a network 105. Although FIG. 1A illustrates a particular arrangement of client system 160, social-networking system 110, third-party system 170, and network 105, this disclosure contemplates any suitable arrangement of client system 160, social-networking system 110, third-party system 170, and network 105. As an example and not by way of limitation, two or more of client system 160, social-networking system 110, and third-party system 170 may be connected to each other directly, bypassing network 105. As another example, two or more of client system 160, social-networking system 110, and third-party system 170 may be physically or logically co-located with each other in whole or in part. Moreover, although FIG. 1A illustrates a particular number of client systems 160, social-networking systems 110, third-party systems 170, and networks 105, this disclosure contemplates any suitable number of client systems 160, social-networking systems 110, third-party systems 170, and networks 105. As an example and not by way of limitation, network environment 100 may include multiple client system 160, social-networking systems 110, third-party systems 170, and networks 105.

This disclosure contemplates any suitable network 105. As an example and not by way of limitation, one or more portions of network 105 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 105 may include one or more networks 105.

Links 150 may connect client system 160, social-networking system 110, and third-party system 170 to communication network 105 or to each other. This disclosure contemplates any suitable links 150. In particular embodiments, one or more links 150 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 150 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout network environment 100. One or more first links 150 may differ in one or more respects from one or more second links 150.

In particular embodiments, client system 160 may be an electronic device including hardware, software, or embedded logic components or a combination of two or more such components and capable of carrying out the appropriate functionalities implemented or supported by client system 160. As an example and not by way of limitation, a client system 160 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client systems 160. A client system 160 may enable a network user at client system 160 to access network 105. A client system 160 may enable its user to communicate with other users at other client systems 160.

In particular embodiments, client system 160 may include a web browser 162, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 160 may enter a Uniform Resource Locator (URL) or other address directing the web browser 162 to a particular server (such as server 112, or a server associated with a third-party system 170), and the web browser 162 may generate a Hyper Text Transfer Protocol (HTTP) request and communicate the HTTP request to server. The server may accept the HTTP request and communicate to client system 160 one or more Hyper Text Markup Language (HTML) files responsive to the HTTP request. Client system 160 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social-networking system 110 may be a network-addressable computing system that can host an online social network. Social-networking system 110 may generate, store, receive, and send social-networking data, such as, for example, user-profile data, concept-profile data, social-graph information, or other suitable data related to the online social network. Social-networking system 110 may be accessed by the other components of network environment 100 either directly or via network 105. In particular embodiments, social-networking system 110 may include one or more servers 112. Each server 112 may be a unitary server or a distributed server spanning multiple computers or multiple datacenters. Servers 112 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 112 may include hardware, software, or embedded logic components or a combination of two or more such components for carrying out the appropriate functionalities implemented or supported by server 112. In particular embodiments, social-networking system 114 may include one or more data stores 114. Data stores 114 may be used to store various types of information. In particular embodiments, the information stored in data stores 114 may be organized according to specific data structures. In particular embodiments, each data store 114 may be a relational, columnar, correlation, or other suitable database. Although this disclosure describes or illustrates particular types of databases, this disclosure contemplates any suitable types of databases. Particular embodiments may provide interfaces that enable a client system 160, a social-networking system 110, or a third-party system 170 to manage, retrieve, modify, add, or delete, the information stored in data store 114.

In particular embodiments, social-networking system 110 may store one or more social graphs in one or more data stores 114. In particular embodiments, a social graph may include multiple nodes-which may include multiple user nodes (each corresponding to a particular user) or multiple concept nodes (each corresponding to a particular concept)-and multiple edges connecting the nodes. Social-networking system 110 may provide users of the online social network the ability to communicate and interact with other users. In particular embodiments, users may join the online social network via social-networking system 110 and then add connections (e.g., relationships) to a number of other users of social-networking system 110 whom they want to be connected to. Herein, the term "friend" may refer to any other user of social-networking system 110 with whom a user has formed a connection, association, or relationship via social-networking system 110.

In particular embodiments, social-networking system 110 may provide users with the ability to take actions on various types of items or objects, supported by social-networking system 110. As an example and not by way of limitation, the items and objects may include groups or social networks to which users of social-networking system 110 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 110 or by an external system of third-party system 170, which is separate from social-networking system 110 and coupled to social-networking system 110 via a network 105.

In particular embodiments, social-networking system 110 may be capable of linking a variety of entities. As an example and not by way of limitation, social-networking system 110 may enable users to interact with each other as well as receive content from third-party systems 170 or other entities, or to allow users to interact with these entities through an application programming interfaces (API) or other communication channels.

In particular embodiments, a third-party system 170 may include one or more types of servers, one or more data stores, one or more interfaces, including but not limited to APIs, one or more web services, one or more content sources, one or more networks, or any other suitable components, e.g., that servers may communicate with. A third-party system 170 may be operated by a different entity from an entity operating social-networking system 110. In particular embodiments, however, social-networking system 110 and third-party systems 170 may operate in conjunction with each other to provide social-networking services to users of social-networking system 110 or third-party systems 170. In this sense, social-networking system 110 may provide a platform, or backbone, which other systems, such as third-party systems 170, may use to provide social-networking services and functionality to users across the Internet.

In particular embodiments, a third-party system 170 may include a third-party content object provider. A third-party content object provider may include one or more sources of content objects, which may be communicated to a client system 160. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 110 also includes user-generated content objects, which may enhance a user's interactions with social-networking system 110. User-generated content may include anything a user can add, upload, send, or "post" to social-networking system 110. As an example and not by way of limitation, a user communicates posts to social-networking system 110 from a client system 160. Posts may include data such as status updates or other textual data, location information, photos, videos, links, music or other similar data or media. Content may also be added to social-networking system 110 by a third-party through a "communication channel," such as a newsfeed or stream.

In particular embodiments, social-networking system 110 may include a variety of servers, sub-systems, programs, modules, logs, and data stores. In particular embodiments, social-networking system 110 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 110 may also include suitable components such as network interfaces, security mechanisms, load balancers, failover servers, management-and-network-operations consoles, other suitable components, or any suitable combination thereof. In particular embodiments, social-networking system 110 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 110 to one or more client systems 160 or one or more third-party system 170 via network 105. The web server may include a mail server or other messaging functionality for receiving and routing messages between social-networking system 110 and one or more client systems 160. An API-request server may allow a third-party system 170 to access information from social-networking system 110 by calling one or more APIs. An action logger may be used to receive communications from a web server about a user's actions on or off social-networking system 110. In conjunction with the action log, a third-party-content-object log may be maintained of user exposures to third-party-content objects. A notification controller may provide information regarding content objects to a client system 160. Information may be pushed to a client system 160 as notifications, or information may be pulled from client system 160 responsive to a request received from client system 160. Authorization servers may be used to enforce one or more privacy settings of the users of social-networking system 110. A privacy setting of a user determines how particular information associated with a user can be shared. The authorization server may allow users to opt in to or opt out of having their actions logged by social-networking system 110 or shared with other systems (e.g., third-party system 170), such as, for example, by setting appropriate privacy settings. Third-party-content-object stores may be used to store content objects received from third parties, such as a third-party system 170. Location stores may be used for storing location information received from client systems 160 associated with users. Advertisement-pricing modules may combine social information, the current time, location information, or other suitable information to provide relevant advertisements, in the form of notifications, to a user.

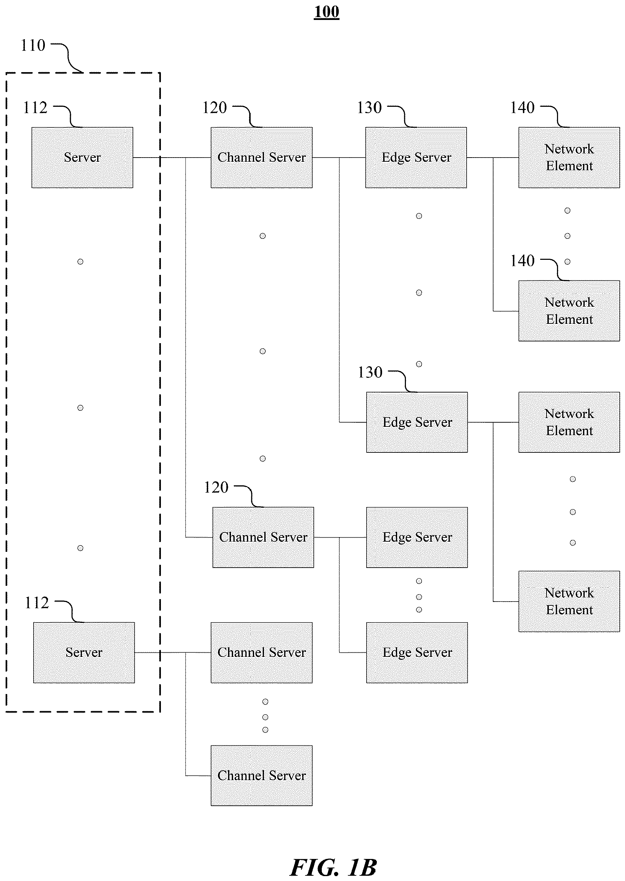

**FIG. 1B** illustrates an example network architecture for environment 100 in which content may be received from (e.g., uploaded from) or pushed to or provided upon request by a network element 140. In particular embodiments, the network element may be associated with one or more users. There may be any number of servers 112, 120, 130 of various types and any number of network elements 140 of various types. Each server 112, 120, or 130 may include hardware, software, or embedded logic components or a combination of two or more such components for carrying out the appropriate functionalities implemented or supported by server 112, 120, or 130. In particular embodiments, servers 112, 120, and 130 may be arranged in tiers. For example, there may be one or more web servers 112 for serving content provided by a social-networking website. Each web server 112 may be connected with one or more channel servers 120. Each channel server 120 may be connected with one or more edge servers 130. Channel servers 120 may monitor and manage content communication channels (e.g., media downloading or uploading, posting and retrieving posts, emailing, instant messaging, chatting, presence, etc.) for the users of the application hosted by web servers 112. Edge servers 130 may maintain network or communication connections with network devices (e.g., network elements 140) for distributing content to one or more users associated with network elements 140. In addition, edge servers 130 may function as proxies for web servers 112 and/or may pre-fetch and cache content served by web servers 112. Network elements 140 may communicate with web servers 112 through edge servers 130. In particular embodiments, servers 112, 120, and 130 and network elements 140 may each have a unique identifier. For example, each server 112, 120, and 130 may be identified by its unique IP address, and each network element 140 may be identified by a permanent and globally unique identifier (e.g., base station identity code (BSIC), common language location identifier (CLLI) code, media access control (MAC) address, Mobile Station International Subscriber Directory Number (MSISDN), international mobile station equipment identity (IMEI), burned-in address (BIA), or other hardware address or physical address).

In particular embodiments, content may be pre-fetched and stored on any of, or a combination of, servers 112, 120, and 130, in addition to network element 140, in anticipation of data transfers that are likely to occur (e.g., determined based on a social affinity score for two particular network elements). Such allocation of content and resources may help speed up distribution of content to the edges of the network (e.g., to one or more users associated with particular network elements) by proactively caching the content at one or more of servers 112, 120, 130, and network element 140 before requests for the content have been received.

In particular embodiments, each network element 140 may provide network service to a client system associated with a user of a social-networking system. Each network element 140 may be a mobile or stationary device that is connected to a network wirelessly or through a wired connection (e.g., a Wi-Fi router or other suitable router, a cell tower base station, switches, hubs, servers, firewalls, gateways, cable modem termination systems, modems, and other suitable devices).

In particular embodiments, when a client system sends a request for content by network element 140, network element 140 may establish one or more connections with an edge server 130. Each connection may be a TCP/IP connection. More specifically, network element 140 may be connected with an edge server 130 that is connected to the channel server 120 to which the user of network element 140 is assigned. The architecture described in FIG. 1 is merely one example provided for illustrative purposes-particular embodiments of the invention may be performed using other network architectures.

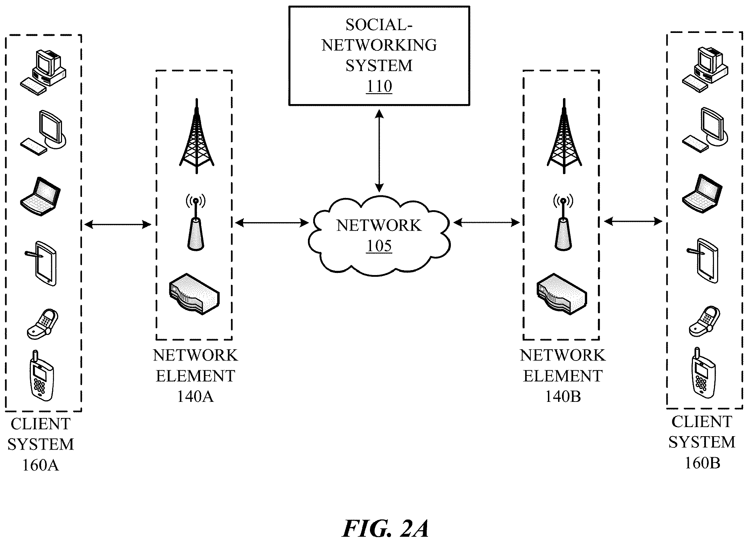

**FIG. 2A** illustrates an example wide area network comprising a plurality of network elements for handling communications between a plurality of users of social-networking system 110. In FIG. 2A, each client system 160 is associated with at least one specific user account in social-networking system 110. As discussed above, content and/or data provided by social-networking system 110 may be served by web servers 112. Specifically, client system 160A may connect to social-networking system 110 using a network element 140A via network 105, and client system 160B may connect to social-networking system 110 using a network element 140B via network 105. Network 105 may include one or more servers such as servers 112, 120, and 130. Client systems 160A and 160B may include, for example, a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. As discussed above, network elements 140 may include, for example, a Wi-Fi router or other router, a cell tower base station, switches, hubs, servers, firewalls, gateways, cable modem termination systems, modems, or other suitable devices.

Links 240A and 240B may connect network elements 140A and 140B, respectively, to network 105. As discussed above, links 240A and 240B may be a TCP/IP connection. Links 250A and 250B may connect client systems 160A and 160B to network elements 140A and 140B, respectively. Links 240A, 240B, 250A, and 250B may include one or more wireline, wireless, or optical links, and in particular, may include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, or any other suitable link.

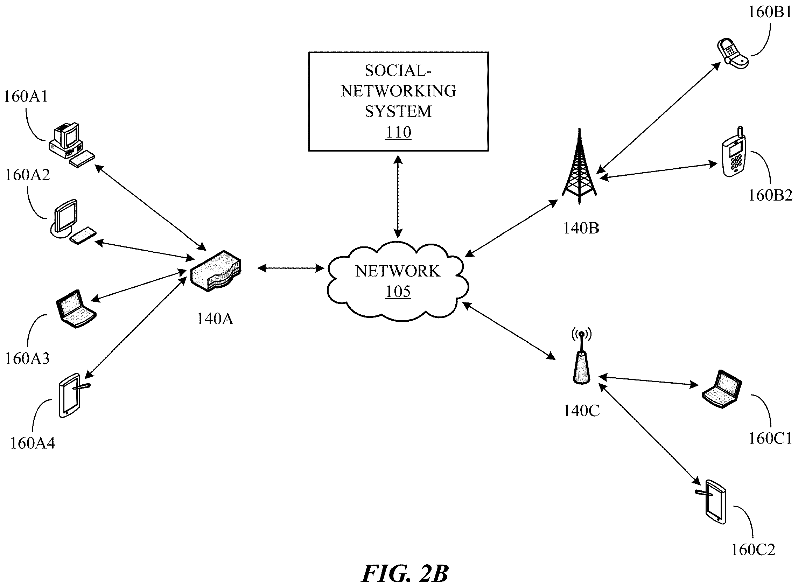

**FIG. 2B** illustrates a specific example of a wide area network comprising two network elements and associated users. In some embodiments, a particular network element 140 may be associated with a particular group of users of social-networking system 110. For example, as shown in FIG. 2B, network element 140A comprises a cell tower base station that is providing data connectivity to client systems 160A1 and 160A2, each of which has a unique identifier that is associated with a respective profile of a user of social-networking system 110. In addition, network element 140B comprises a router that is connected to client systems 160B1, 160B2, 160B3, and 160B4.

One or more social-networking system users associated with a particular network element 140 may be identified by, for example, information uniquely identifying their client systems, information associated with social-networking system 110 (e.g., social-networking userID), or any other suitable identification information uniquely identifying the user. In one example, when the user's client system 160A1 transmits its unique identifier (e.g., MAC address) to network element 140A (e.g., a Wi-Fi router) when initiating a TCP connection, network element 140A may send a request to social-networking system 110 to determine whether the laptop's unique identifier is associated with a user account of the social-networking system. In another example, the user of client system 160A1 may be identified when the user provides authentication credentials (e.g., username and password) for their social-networking account on client system 160A1. In either case, once client system 160A1 is connected to network element 140A, network element 140A may send a request (separately, or in combination with the authentication requests described above) to social-networking system 110 for information regarding social-networking users who are social-graph connections of the user of client system 160A1 ("friends"), such as, for example: a social-networking userID for each friend, the unique identifier for a friend's client system 160B or 160C, the unique identifier for a network element (140B or 140C) to which the friend's client system 160B or 160C is connected, and a social affinity score for the social-graph relationship between the user of client system 160A1 and their friend. In particular embodiments, network element 140A may retrieve and store such information each time a client system 160A establishes a connection with network element 140A, thereby determining the set of network elements 140 to which client systems of the user's friends are connected.

For each pairing of network element 140A with one of the set of network elements 140 to which client systems of the user's friends are connected, network element 140A then calculates a collective social affinity score based on the received information. In particular embodiments, social-networking system 110 may calculate the collective social affinity scores across all network elements 140 and then send information to each network element 140 for its network element pairs (where that particular network element 140 is one of the network elements in the pair). In particular embodiments, social-networking system 110 may only send information to each network element 140 for its network element pairs where the collective social affinity score for the network element pair exceeds a minimum threshold.

When the collective social affinity score for a network element pair exceeds a specified minimum threshold, the two network elements in the pair take certain actions to reduce latency associated with data transmissions involving client systems connected to the two network elements. For example, if the social graph for a user of client system 160A1 includes a friend who is associated with client system 160B2 and another friend who is associated with client system 160C1, network element 140A sends a notification to network elements 140B and 140C that content is being, has been, or will be uploaded, which allows network elements 140B and 140C to determine whether they should take certain steps, such as sending a request to pre-fetch the uploaded content or allocating resources that may be needed if and when their respective connected client systems send a request for the uploaded content.

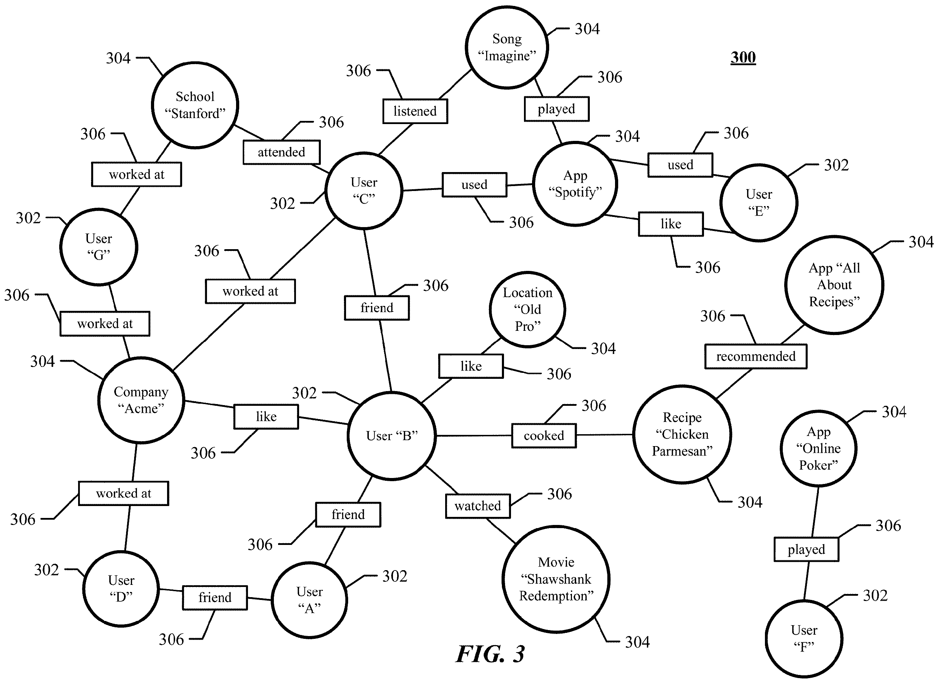

**FIG. 3** illustrates example social graph 300. In particular embodiments, social-networking system 110 may store one or more social graphs 300 in one or more data stores. In particular embodiments, social graph 300 may include multiple nodes-which may include multiple user nodes 302 or multiple concept nodes 304-and multiple edges 306 connecting the nodes. Example social graph 300 illustrated in FIG. 3 is shown, for didactic purposes, in a two-dimensional visual map representation. In particular embodiments, a social-networking system 110 may access social graph 300 and related social-graph information for suitable applications. The nodes and edges of social graph 300 may be stored as data objects, for example, in a data store (such as a social-graph database). Such a data store may include one or more searchable or queryable indexes of nodes or edges of social graph 300.

In particular embodiments, a user node 302 may correspond to a user of social-networking system 110. As an example and not by way of limitation, a user may be an individual (human user), an entity (e.g., an enterprise, business, or third-party application), or a group (e.g., of individuals or entities) that interacts or communicates with or over social-networking system 110. In particular embodiments, when a user registers for an account with social-networking system 110, social-networking system 110 may create a user node 302 corresponding to the user, and store the user node 302 in one or more data stores. Users and user nodes 302 described herein may, where appropriate, refer to registered users and user nodes 302 associated with registered users. In addition or as an alternative, users and user nodes 302 described herein may, where appropriate, refer to users that have not registered with social-networking system 110. In particular embodiments, a user node 302 may be associated with information provided by a user or information gathered by various systems, including social-networking system 110. As an example and not by way of limitation, a user may provide his or her name, profile picture, contact information, birth date, sex, marital status, family status, employment, education background, preferences, interests, or other demographic information. In particular embodiments, a user node 302 may be associated with one or more data objects corresponding to information associated with a user. In particular embodiments, a user node 302 may correspond to one or more webpages.

In particular embodiments, a concept node 304 may correspond to a concept. As an example and not by way of limitation, a concept may correspond to a place (such as, for example, a movie theater, restaurant, landmark, or city); a website (such as, for example, a website associated with social-network system 110 or a third-party website associated with a web-application server); an entity (such as, for example, a person, business, group, sports team, or celebrity); a resource (such as, for example, an audio file, video file, digital photo, text file, structured document, or application) which may be located within social-networking system 110 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 304 may be associated with information of a concept provided by a user or information gathered by various systems, including social-networking system 110. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 304 may be associated with one or more data objects corresponding to information associated with concept node 304. In particular embodiments, a concept node 304 may correspond to one or more webpages.

In particular embodiments, a node in social graph 300 may represent or be represented by a webpage (which may be referred to as a "profile page"). Profile pages may be hosted by or accessible to social-networking system 110. Profile pages may also be hosted on third-party websites associated with a third-party server 170. As an example and not by way of limitation, a profile page corresponding to a particular external webpage may be the particular external webpage and the profile page may correspond to a particular concept node 304. Profile pages may be viewable by all or a selected subset of other users. As an example and not by way of limitation, a user node 302 may have a corresponding user-profile page in which the corresponding user may add content, make declarations, or otherwise express himself or herself. As another example and not by way of limitation, a concept node 304 may have a corresponding concept-profile page in which one or more users may add content, make declarations, or express themselves, particularly in relation to the concept corresponding to concept node 304.

In particular embodiments, a concept node 304 may represent a third-party webpage or resource hosted by a third-party system 170. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check-in," "eat," "recommend," or another suitable action or activity. A user viewing the third-party webpage may perform an action by selecting one of the icons (e.g., "check-in"), causing a client system 130 to send to social-networking system 110 a message indicating the user's action. In response to the message, social-networking system 110 may create an edge (e.g., a check-in-type edge) between a user node 302 corresponding to the user and a concept node 304 corresponding to the third-party webpage or resource and store edge 306 in one or more data stores.

In particular embodiments, a pair of nodes in social graph 300 may be connected to each other by one or more edges 306. An edge 306 connecting a pair of nodes may represent a relationship between the pair of nodes. In particular embodiments, an edge 306 may include or represent one or more data objects or attributes corresponding to the relationship between a pair of nodes. As an example and not by way of limitation, a first user may indicate that a second user is a "friend" of the first user. In response to this indication, social-networking system 110 may send a "friend request" to the second user. If the second user confirms the "friend request," social-networking system 110 may create an edge 306 connecting the first user's user node 302 to the second user's user node 302 in social graph 300 and store edge 306 as social-graph information in one or more of data stores 164. In the example of FIG. 3, social graph 300 includes an edge 306 indicating a friend relation between user nodes 302 of user "A" and user "B" and an edge indicating a friend relation between user nodes 302 of user "C" and user "B." Although this disclosure describes or illustrates particular edges 306 with particular attributes connecting particular user nodes 302, this disclosure contemplates any suitable edges 306 with any suitable attributes connecting user nodes 302. As an example and not by way of limitation, an edge 306 may represent a friendship, family relationship, business or employment relationship, fan relationship (including, e.g., liking, etc.), follower relationship, visitor relationship (including, e.g., accessing, viewing, checking-in, sharing, etc.), subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 300 by one or more edges 306.

In particular embodiments, an edge 306 between a user node 302 and a concept node 304 may represent a particular action or activity performed by a user associated with user node 302 toward a concept associated with a concept node 304. As an example and not by way of limitation, as illustrated in FIG. 3, a user may "like," "attended," "played," "listened," "cooked," "worked at," or "watched" a concept, each of which may correspond to an edge type or subtype. A concept-profile page corresponding to a concept node 304 may include, for example, a selectable "check in" icon (such as, for example, a clickable "check in" icon) or a selectable "add to favorites" icon. Similarly, after a user clicks these icons, social-networking system 110 may create a "favorite" edge or a "check in" edge in response to a user's action corresponding to a respective action. As another example and not by way of limitation, a user (user "C") may listen to a particular song ("Imagine") using a particular application (SPOTIFY, which is an online music application). In this case, social-networking system 110 may create a "listened" edge 306 and a "used" edge (as illustrated in FIG. 3) between user nodes 302 corresponding to the user and concept nodes 304 corresponding to the song and application to indicate that the user listened to the song and used the application. Moreover, social-networking system 110 may create a "played" edge 306 (as illustrated in FIG. 3) between concept nodes 304 corresponding to the song and the application to indicate that the particular song was played by the particular application. In this case, "played" edge 306 corresponds to an action performed by an external application (SPOTIFY) on an external audio file (the song "Imagine"). Although this disclosure describes particular edges 306 with particular attributes connecting user nodes 302 and concept nodes 304, this disclosure contemplates any suitable edges 306 with any suitable attributes connecting user nodes 302 and concept nodes 304. Moreover, although this disclosure describes edges between a user node 302 and a concept node 304 representing a single relationship, this disclosure contemplates edges between a user node 302 and a concept node 304 representing one or more relationships. As an example and not by way of limitation, an edge 306 may represent both that a user likes and has used at a particular concept. Alternatively, another edge 306 may represent each type of relationship (or multiples of a single relationship) between a user node 302 and a concept node 304 (as illustrated in FIG. 3 between user node 302 for user "E" and concept node 304 for "SPOTIFY").

In particular embodiments, social-networking system 110 may create an edge 306 between a user node 302 and a concept node 304 in social graph 300. As an example and not by way of limitation, a user viewing a concept-profile page (such as, for example, by using a web browser or a special-purpose application hosted by the user's client system 130) may indicate that he or she likes the concept represented by the concept node 304 by clicking or selecting a "Like" icon, which may cause the user's client system 130 to send to social-networking system 110 a message indicating the user's liking of the concept associated with the concept-profile page. In response to the message, social-networking system 110 may create an edge 306 between user node 302 associated with the user and concept node 304, as illustrated by "like" edge 306 between the user and concept node 304. In particular embodiments, social-networking system 110 may store an edge 306 in one or more data stores. In particular embodiments, an edge 306 may be automatically formed by social-networking system 110 in response to a particular user action. As an example and not by way of limitation, if a first user uploads a picture, watches a movie, or listens to a song, an edge 306 may be formed between user node 302 corresponding to the first user and concept nodes 304 corresponding to those concepts. Although this disclosure describes forming particular edges 306 in particular manners, this disclosure contemplates forming any suitable edges 306 in any suitable manner.

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more web pages, in one or more e-mails, or in connection with search results requested by a user. In addition or as an alternative, an advertisement may be one or more sponsored stories (e.g., a news-feed or ticker item on social-networking system 110). A sponsored story may be a social action by a user (such as "liking" a page, "liking" or commenting on a post on a page, RSVPing to an event associated with a page, voting on a question posted on a page, checking in to a place, using an application or playing a game, or "liking" or sharing a website) that an advertiser promotes, for example, by having the social action presented within a pre-determined area of a profile page of a user or other page, presented with additional information associated with the advertiser, bumped up or otherwise highlighted within news feeds or tickers of other users, or otherwise promoted. The advertiser may pay to have the social action promoted. The social action may be promoted within or on social-networking system 110. In addition or as an alternative, the social action may be promoted outside or off of social-networking system 110, where appropriate. In particular embodiments, a page may be an on-line presence (such as a webpage or website within or outside of social-networking system 110) of a business, organization, or brand facilitating its sharing of stories and connecting with people. A page may be customized, for example, by adding applications, posting stories, or hosting events.

A sponsored story may be generated from stories in users' news feeds and promoted to specific areas within displays of users' web browsers when viewing a web page associated with social-networking system 110. Sponsored stories are more likely to be viewed by users, at least in part because sponsored stories generally involve interactions or suggestions by the users' friends, fan pages, or other connections. In connection with sponsored stories, particular embodiments may utilize one or more systems, components, elements, functions, methods, operations, or steps disclosed in U.S. Patent Application No. 13/327557, entitled "Sponsored Stories Unit Creation from Organic Activity Stream" and filed 15 December 2011, U.S. Patent Application Publication No. us 2012/0203831, entitled "Sponsored Stories Unit Creation from Organic Activity Stream" and filed 3 February 2012 as U.S. Patent Application No. 13/020745, or U.S. Patent Application Publication No. us 2012/0233009, entitled "Endorsement Subscriptions for Sponsored Stories" and filed 9 March 2011 as U.S. Patent Application No. 13/044506. In particular embodiments, sponsored stories may utilize computer-vision algorithms to detect products in uploaded images or photos lacking an explicit connection to an advertiser as disclosed in U.S. Patent Application No. 13/212356, entitled "Computer-Vision Content Detection for Sponsored Stories", filed 18 August 2011 and published as US 2012/0197709 A1.

As described above, an advertisement may be text (which may be HTML-linked), one or more images (which may be HTML-linked), one or more videos, audio, one or more ADOBE FLASH files, a suitable combination of these, or any other suitable advertisement in any suitable digital format. In particular embodiments, an advertisement may be requested for display within third-party webpages, social-networking-system webpages, or other pages. An advertisement may be displayed in a dedicated portion of a page, such as in a banner area at the top of the page, in a column at the side of the page, in a GUI of the page, in a pop-up window, over the top of content of the page, or elsewhere with respect to the page. In addition or as an alternative, an advertisement may be displayed within an application or within a game. An advertisement may be displayed within dedicated pages, requiring the user to interact with or watch the advertisement before the user may access a page, utilize an application, or play a game. The user may, for example view the advertisement through a web browser.

A user may interact with an advertisement in any suitable manner. The user may click or otherwise select the advertisement, and the advertisement may direct the user (or a browser or other application being used by the user) to a page associated with the advertisement. At the page associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). In particular embodiments, an advertisement may include one or more games, which a user or other application may play in connection with the advertisement. An advertisement may include functionality for responding to a poll or question in the advertisement.

An advertisement may include social-networking-system functionality that a user may interact with. For example, an advertisement may enable a user to "like" or otherwise endorse the advertisement by selecting an icon or link associated with endorsement. Similarly, a user may share the advertisement with another user (e.g., through social-networking system 110) or RSVP (e.g., through social-networking system 110) to an event associated with the advertisement. In addition or as an alternative, an advertisement may include social-networking-system context directed to the user. For example, an advertisement may display information about a friend of the user within social-networking system 110 who has taken an action associated with the subject matter of the advertisement.

Social-networking-system functionality or context may be associated with an advertisement in any suitable manner. For example, an advertising system (which may include hardware, software, or both for receiving bids for advertisements and selecting advertisements in response) may retrieve social-networking functionality or context from social-networking system 110 and incorporate the retrieved social-networking functionality or context into the advertisement before serving the advertisement to a user. Examples of selecting and providing social-networking-system functionality or context with an advertisement are disclosed in U.S. Patent Application Publication No. US 2012/0084160, entitled "Providing Social Endorsements with Online Advertising" and filed 5 October 2010 as U.S. Patent Application No. 12/898662, and in U.S. Patent Application Publication No. US 2012/0232998, entitled "Selecting Social Endorsement Information for an Advertisement for Display to a Viewing User" and filed 8 March 2011 as U.S. Patent Application No. 13/043424. Interacting with an advertisement that is associated with social-networking-system functionality or context may cause information about the interaction to be displayed in a profile page of the user in social-networking-system 110.

Particular embodiments may facilitate the delivery of advertisements to users that are more likely to find the advertisements more relevant or useful. For example, an advertiser may realize higher conversion rates (and therefore higher return on investment (ROI) from advertising) by identifying and targeting users that are more likely to find its advertisements more relevant or useful. The advertiser may use user-profile information in social-networking system 110 to identify those users. In addition or as an alternative, social-networking system 110 may use user-profile information in social-networking system 110 to identify those users for the advertiser. As examples and not by way of limitation, particular embodiments may target users with the following: invitations or suggestions of events; suggestions regarding coupons, deals, or wish-list items; suggestions regarding friends' life events; suggestions regarding groups; advertisements; or social advertisements. Such targeting may occur, where appropriate, on or within social-networking system 110, off or outside of social-networking system 110, or on mobile computing devices of users. When on or within social-networking system 110, such targeting may be directed to users' news feeds, search results, e-mail or other in-boxes, or notifications channels or may appear in particular area of web pages of social-networking system 110, such as a right-hand side of a web page in a concierge or grouper area (which may group along a right-hand rail advertisements associated with the same concept, node, or object) or a network-ego area (which may be based on what a user is viewing on the web page and a current news feed of the user). When off or outside of social-networking system 110, such targeting may be provided through a third-party website, e.g., involving an ad exchange or a social plug-in. When on a mobile computing device of a user, such targeting may be provided through push notifications to the mobile computing device.

Targeting criteria used to identify and target users may include explicit, stated user interests on social-networking system 110 or explicit connections of a user to a node, object, entity, brand, or page on social-networking system 110. In addition or as an alternative, such targeting criteria may include implicit or inferred user interests or connections (which may include analyzing a user's history, demographic, social or other activities, friends' social or other activities, subscriptions, or any of the preceding of other users similar to the user (based, e.g., on shared interests, connections, or events)). Particular embodiments may utilize platform targeting, which may involve platform and "like" impression data; contextual signals (e.g., "Who is viewing now or has viewed recently the page for COCA-COLA?"); light-weight connections (e.g., "check-ins"); connection lookalikes; fans; extracted keywords; EMU advertising; inferential advertising; coefficients, affinities, or other social-graph information; friends-of-friends connections; pinning or boosting; deals; polls; household income, social clusters or groups; products detected in images or other media; social- or open-graph edge types; geo-prediction; views of profile or pages; status updates or other user posts (analysis of which may involve natural-language processing or keyword extraction); events information; or collaborative filtering. Identifying and targeting users may also include privacy settings (such as user opt-outs), data hashing, or data anonymization, as appropriate.

To target users with advertisements, particular embodiments may utilize one or more systems, components, elements, functions, methods, operations, or steps disclosed in the following: U.S. Patent Application Publication No. US 2009/0119167, entitled "Social Advertisements and Other Informational Messages on a Social Networking Website and Advertising Model for Same" and filed 18 August 2008 as U.S. Patent Application No. 12/193702; U.S. Patent Application Publication No. US 2009/0070219, entitled "Targeting Advertisements in a Social Network" and filed 20 August 2008 as U.S. Patent Application No. 12/195321; U.S. Patent Application Publication No. US 2012/0158501, entitled "Targeting Social Advertising to Friends of Users Who Have Interacted With an Object Associated with the Advertising" and filed 15 December 2010 as U.S. Patent Application No. 12/968786; or U.S. Patent Application Publication No. US 2012/0166532, entitled "Contextually Relevant Affinity Prediction in a Social-Networking System" and filed 23 December 2010 as U.S. Patent Application No. 12/978265.

An advertisement may be presented or otherwise delivered using plug-ins for web browsers or other applications, iframe elements, news feeds, tickers, notifications (which may include, for example, e-mail, Short Message Service (SMS) messages, or notifications), or other means. An advertisement may be presented or otherwise delivered to a user on a mobile or other computing device of the user. In connection with delivering advertisements, particular embodiments may utilize one or more systems, components, elements, functions, methods, operations, or steps disclosed in the following: U.S. Patent Application Publication No. US 2012/0159635, entitled "Comment Plug-In for Third-Party System" and filed 15 December 2010 as U.S. Patent Application No. 12/969368; U.S. Patent Application Publication No. US 2012/0158753, entitled "Comment Ordering System" and filed 15 December 2010 as U.S. Patent Application No. 12/969408; U.S. Patent No. 7,669,123, entitled "Dynamically Providing a News Feed About a User of a Social Network" and filed 11 August 2006 as U.S. Patent Application No. 11/503242; U.S. Patent Application Publication No. US 2008/0040475, entitled "Providing a News Feed Based on User Affinity in a Social Network Environment" and filed 11 August 2006 as U.S. Patent Application No. 11/503093; U.S. Patent Application Publication No. US 2012/0072428, entitled "Action Clustering for News Feeds" and filed 16 September 2010 as U.S. Patent Application No. 12/884010; U.S. Patent Application Publication No. US 2001/0004692, entitled "Gathering Information about Connections in a Social Networking Service" and filed 1 July 2009 as U.S. Patent Application No. 12/496606; U.S. Patent Application Publication No. US 2008/0065701, entitled "Method and System for Tracking Changes to User Content in an Online Social Network" and filed 12 September 2006 as U.S. Patent Application No. 11/531154; U.S. Patent Application Publication No. US 2008/0065604, entitled "Feeding Updates to Landing Pages of Users of an Online Social Network from External Sources" and filed 17 January 2007 as U.S. Patent Application No. 11/624088; U.S. Patent No. 8,244,848, entitled "Integrated Social-Network Environment" and filed 19 April 2010 as U.S. Patent Application No. 12/763171; U.S. Patent Application Publication No. US 2011/0083101, entitled "Sharing of Location-Based Content Item in Social-Networking Service" and filed 6 October 2009 as U.S. Patent Application No. 12/574614; U.S. Patent No. 8,150,844, entitled "Location Ranking Using Social-Graph Information" and filed 18 August 2010 as U.S. Patent Application No. 12/858718; U.S. Patent Application No. 13/051286, entitled "Sending Notifications to Users Based on Users' Notification Tolerance Levels" and filed 18 March 2011; U.S. Patent Application No. 13/096184, entitled "Managing Notifications Pushed to User Devices" and filed 28 April 2011; U.S. Patent Application No. 13/276248, entitled "Platform-Specific Notification Delivery Channel" and filed 18 October 2011; or U.S. Patent Application Publication No. US 2012/0197709, entitled "Mobile Advertisement with Social Component for Geo-Social Networking System" and filed 1 February 2011 as U.S. Patent Application No. 13/019061. Although this disclosure describes or illustrates particular advertisements being delivered in particular ways and in connection with particular content, this disclosure contemplates any suitable advertisements delivered in any suitable ways and in connection with any suitable content.

In particular embodiments, social-networking system 110 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, social-networking system 110 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part a the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, social-networking system 110 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the social-networking system 110 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, social-networking system 110 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, social-networking system 110 may calculate a coefficient based on a user's actions. Social-networking system 110 may monitor such actions on the online social network, on a third-party system 170, on other suitable systems, or any combination thereof. Any suitable type of user actions may be tracked or monitored. Typical user actions include viewing profile pages, creating or posting content, interacting with content, tagging or being tagged in images, joining groups, listing and confirming attendance at events, checking-in at locations, liking particular pages, creating pages, and performing other tasks that facilitate social action. In particular embodiments, social-networking system 110 may calculate a coefficient based on the user's actions with particular types of content. The content may be associated with the online social network, a third-party system 170, or another suitable system. The content may include users, profile pages, posts, news stories, headlines, instant messages, chat room conversations, emails, advertisements, pictures, video, music, other suitable objects, or any combination thereof. Social-networking system 110 may analyze a user's actions to determine whether one or more of the actions indicate an affinity for subject matter, content, other users, and so forth. As an example and not by way of limitation, if a user may make frequently posts content related to "coffee" or variants thereof, social-networking system 110 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, social-networking system 110 may calculate a coefficient based on the type of relationship between particular objects. Referencing the social graph 300, social-networking system 110 may analyze the number and/or type of edges 306 connecting particular user nodes 302 and concept nodes 304 when calculating a coefficient. As an example and not by way of limitation, user nodes 302 that are connected by a spouse-type edge (representing that the two users are married) may be assigned a higher coefficient than a user nodes 302 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, social-networking system 110 may determine that the user has a higher coefficient with respect to the first photo than the second photo because having a tagged-in-type relationship with content may be assigned a higher weight and/or rating than having a like-type relationship with content. In particular embodiments, social-networking system 110 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, social-networking system 110 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 300. As an example and not by way of limitation, social-graph entities that are closer in the social graph 300 (i.e., fewer degrees of separation) may have a higher coefficient than entities that are further apart in the social graph 300.

In particular embodiments, social-networking system 110 may calculate a coefficient based on location information. Objects that are geographically closer to each other may be considered to be more related or of more interest to each other than more distant objects. In particular embodiments, the coefficient of a user towards a particular object may be based on the proximity of the object's location to a current location associated with the user (or the location of a client system 130 of the user). A first user may be more interested in other users or concepts that are closer to the first user. As an example and not by way of limitation, if a user is one mile from an airport and two miles from a gas station, social-networking system 110 may determine that the user has a higher coefficient for the airport than the gas station based on the proximity of the airport to the user.

In particular embodiments, social-networking system 110 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, social-networking system 110 may provide information that is relevant to user's interests and current circumstances, increasing the likelihood that they will find such information of interest. In particular embodiments, social-networking system 110 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, social-networking system 110 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, social-networking system 110 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 170 (e.g., via an API or other communication channel), or from another suitable system. In response to the request, social-networking system 110 may calculate the coefficient (or access the coefficient information if it has previously been calculated and stored). In particular embodiments, social-networking system 110 may measure an affinity with respect to a particular process. Different processes (both internal and external to the online social network) may request a coefficient for a particular object or set of objects. Social-networking system 110 may provide a measure of affinity that is relevant to the particular process that requested the measure of affinity. In this way, each process receives a measure of affinity that is tailored for the different context in which the process will use the measure of affinity.

In particular embodiments, social-networking system 110 may calculate a collective social affinity score for two different network elements connected to social-networking system 110 based on social affinity scores for pairs of users, wherein one of the users in each pair is connected to one of the network elements and the other one of the users in each pair is connected to the other network element. In particular embodiments, the social affinity score for the social-graph relationship between each pair of users is determined by and may be retrieved from (or provided by) the social-networking system. The collective social affinity score may be calculated as a simple average of the social affinity scores for each pair of users or a weighted average. In addition, the collective social affinity score may be re-calculated on a periodic basis, re-calculated each time a user's client system connects to or disconnects from one of the two network elements for which the collective social affinity score was calculated, or re-calculated in the case where the social-networking system sends out updated social affinity score information (e.g., for those relationships whose social affinity scores changed by more than a specified amount). In particular embodiments, the calculation of the collective social affinity score may only take into consideration social affinity scores for particular user pairs (e.g., user pairs where at least one of the users is considered to be a "premium user" who has paid for higher quality of service, or user pairs where at least one of the users exceeds a minimum threshold of regular activity on the social-networking system).

For example, as shown in FIG. 2B, a pair of network elements may include router 140A and cell tower base station 140B. The collective social affinity score for cell tower base station 140A and router 140B may be determined based on the social affinity scores for pairs of users being serviced by the two network elements. Specifically, the calculation of the collective social affinity score may be performed by social-networking system 110, by the network elements (e.g., at cell tower base station 140A and/or router 140B), by a third-party system 260, or at any other suitable intermediary elements capable of making the calculations. In addition, the collective social affinity score may be calculated based on activities involving social-networking system 110, and may also be calculated based on user activities not involving social-networking system 110 but still using the network elements (e.g., sending and receiving messages such as, for example, email, SMS, MMS, etc.).

In particular embodiments, as connections between a network element 140 and client systems 160 are established, a network element 140 may log information such as, by way of example and not limitation: the social-networking user identifier for a user associated with the newly-connected client system 160, a social-networking user identifier for each social-graph connection of the user and a social affinity score for the relationship between the user and the social-graph connection, identifiers for the client systems of the social-graph connections of the user, and other related information and metadata (e.g., timestamp information indicating when the client system for each user in the pair of users connected to its respective network element).

When calculated as a weighted average, the collective social affinity scores may be determined using weights based on a variety of factors including user actions, types of relationships between users/objects, location information, data size and/or frequency of data transmissions between users, or other suitable factors.

As noted above, the collective social affinity score may change over time as it is re-calculated. For example, if a particular cell tower is in a business district, during the day, the users served by that cell tower may be employees or customers of the commercial businesses in that area. The calls, communications, and/or uploaded content for that tower during the day may be business-oriented (e.g., to other cell towers in other business districts), and the collective social affinity score with respect to other business district cell towers may be greater. At nighttime, the user base may change to employees or customers of bars, restaurants, and other similar establishments, in the same area, which may result in a different user base connecting to the particular cell tower and communicating with different network elements (e.g., to routers in residential areas). Accordingly, the collective social affinity score with respect to these different network elements may increase, while the collective social affinity score with respect to other cell tower base stations in other business districts may decrease.

To take into account any potential change in the collective social affinity score over certain periods of time, social-networking system 110 may poll the network elements at consistent intervals (e.g., every five minutes, every hour, etc.). In other embodiments, the network elements may detect a new user when a connection with the new user's client system is established and may request social graph data for the new user (including social affinity scores for the new user's relationships with other users in the social graph) from social-networking system 110, and use the retrieved social graph data to update their collective social affinity scores. As such, the collective social affinity score may be re-calculated on a regular and continual basis.

In connection with social-graph affinity and affinity coefficients, particular embodiments may utilize one or more systems, components, elements, functions, methods, operations, or steps disclosed in U.S. Patent Application No. 11/503093, filed 11 August 2006 and published as US 2008/0040475 A1, U.S. Patent Application No. 12/977027, filed 22 December 2010 and published as US 2012/0166433 A1, U.S. Patent Application No. 12/978265, filed 23 December 2010 and published as US 2012/0166532 A1, and U.S. Patent Application No. 13/632869, filed 01 October 2012 and published as US 2014/0095606 A1.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 204 corresponding to a particular photo may have a privacy setting specifying that the photo may only be accessed by users tagged in the photo and their friends. In particular embodiments, privacy settings may allow users to opt in or opt out of having their actions logged by social-networking system 160 or shared with other systems (e.g., third-party system 170). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 170, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers 162 may be authorization/privacy servers for enforcing privacy settings. In response to a request from a user (or other entity) for a particular object stored in a data store 164, social-networking system 160 may send a request to the data store 164 for the object. The request may identify the user associated with the request and may only be sent to the user (or a client system 130 of the user) if the authorization server determines that the user is authorized to access the object based on the privacy settings associated with the object. If the requesting user is not authorized to access the object, the authorization server may prevent the requested object from being retrieved from the data store 164, or may prevent the requested object from be sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

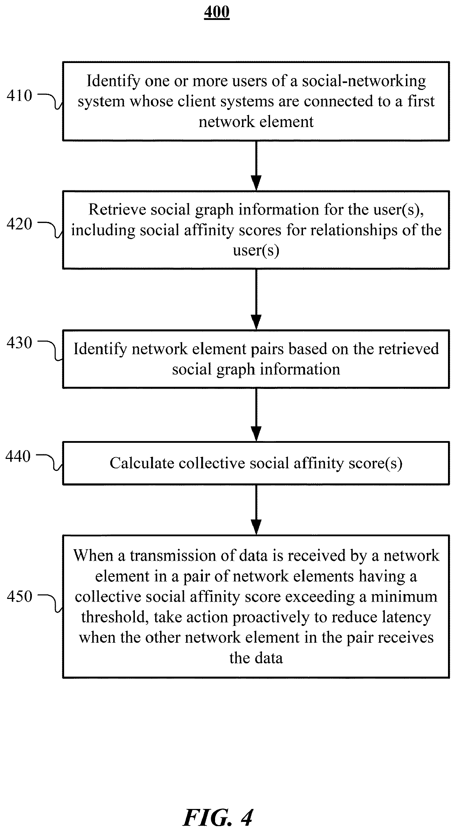

**FIG. 4** illustrates an example method 400 for calculating and utilizing collective social affinity scores for pairs of network elements. Example method 400 may be performed by social-networking system 110, by the network elements, by a third-party system 260, or by any intermediary elements capable of making the calculations. The method begins at step 410, where one or more first users of a social-networking system whose client systems are connected to a first network element are identified. For example, these first users may be identified in real time, or a list of users may be retrieved from a predetermined location (e.g., a memory or data associated with social-networking system 110, a particular network element, or other suitable storage location).

At step 420, social graph information is retrieved for each of the one or more first users, including social affinity scores for relationships of the user(s).. For example, this social graph information may be retrieved from social-networking system 110. At step 430, pairs of network elements are identified based on the retrieved social graph information. At step 440, a collective social affinity score is calculated for each pair of network elements. The collective social affinity score may be calculated based at least in part on the social affinity scores for the social graph relationships between the one or more first users and the one or more second users. Finally, at step 450, when a transmission of data is received by a network element in a pair of network elements having a collective social affinity score exceeding a minimum threshold, they take action proactively to reduce latency when the other network element in the pair receives the data. Both network elements in each pair take proactive action: the network element initially receiving the data transmission from a connected client system sends a notification to the other network element in the pair, which in turn pre-fetches the data transmission or a portion thereof or allocate resources in preparation for an increase in demand in connection with the data transmission.

Particular embodiments may repeat one or more steps of the method of FIG. 4, where appropriate. Although this disclosure describes and illustrates particular steps of the method of FIG. 4 as occurring in a particular order, this disclosure contemplates any suitable steps of the method of FIG. 4 occurring in any suitable order. Moreover, although this disclosure describes and illustrates an example method for computing and utilizing social scores for network elements including the particular steps of the method of FIG. 4, this disclosure contemplates any suitable method for computing and utilizing social scores for network elements including any suitable steps, which may include all, some, or none of the steps of the method of FIG. 4, where appropriate. Furthermore, although this disclosure describes and illustrates particular components, devices, or systems carrying out particular steps of the method of FIG. 4, this disclosure contemplates any suitable combination of any suitable components, devices, or systems carrying out any suitable steps of the method of FIG. 4.

Non-limiting examples of types of action on the transmission of data that may occur based on the collective social affinity score are now described. As previously discussed, the collective social affinity score may be used to determine whether a user associated with a first network element might request content provided or uploaded to the social-networking system by a user associated with a second network element. In addition or alternatively, the collective social affinity score may be used to determine whether a user associated with a first network element may also be likely to view and/or download content that a user associated with a second network element viewed and/or downloaded based on a high collective social affinity score between the two network elements. In these situations, to increase the efficiency by which the likely-requested content may be provided to a user, this content may be pre-fetched to certain servers and/or network elements, and/or resources for establishing and maintaining connections from the social-networking system to these network elements for transferring the likely-requested content may be allocated before a request occurs.

As an example, a user associated with a first network element may upload content to social-networking system 110. Cell tower base station 140B may be determined to have a high collective social affinity score with respect to router 140A. As a result, router 140A may pre-fetch content uploaded by way of cell tower base station 140B (e.g., either by caching the content itself or storing metadata associated with the content) to social-networking system 110 so that if a user associated with router 140A decides to download the uploaded content, any latency incurred for the download will be reduced, since the content (or metadata that may provide information and/or notification to retrieve the uploaded content) is already present and available on router 140A. Because the content had been pre-fetched and cached in router 140A, the content may be provided with reduced latency to any of the users associated with router 140A.

In some embodiments, pre-fetching may be done independently of social-networking system 110. For example, if a user uploads content through a first network element, this first network element may broadcast a notification to other network elements (e.g., the network elements it has previously connected to or only network elements it has recently connected to) that there is uploaded content which may be of interest to a user of a second network element. The second network element, which at this time may have a high social affinity score with respect to the first network element, may then pre-fetch the content or metadata relating to the content in anticipation of potential future requests for the content.

In some embodiments, the pre-fetched content may require an additional layer of security at the network element level so that unauthorized users cannot access the content at the network element. As discussed above, a privacy setting for an object, such as a network element, may specify how content stored on the content element may be accessed, and may be determined based on information associated with social-networking system 110. In addition, enforcing privacy settings may be done via social-networking system 110, the specific network element, or in any other suitable manner.

As another example, every evening, a user associated with a first network element (e.g., in FIG. 2B, a user associated with cell tower base station 140B) may initiate a video chat with a user of a second network element (e.g., a user associated with router 140A) at a particular time, so that the collective social affinity score of cell tower base station 140B with respect to router 140A is high in the evening. In anticipation of the data transfer that regularly occurs in the evening between cell tower base station 140B and router 140A, a network connection between cell tower base station 140A and router 140B may be established and reserved for this purpose before the moment when the video call is initiated. As a result, when the user initiates the call, the network connection has already been established, shortening the time to initiate the call over network 105.

In some embodiments, this may allow for resources to establish new TCP connections to be time-shifted, for example, if the calls are being made at a time when network 105 is busy. In addition, based at least on the collective social affinity score, social-networking system 110 may anticipate a particular time when many new TCP connections are requested (e.g., a lot of messages, posts, and/or calls anticipated to be made during or after a particular event), establish in advance any TCP connections between particular network elements that are determined to likely occur, and free up resources to establish new connections which may not have been predictable or anticipated, resulting in better allocation of resources for establishing and maintaining data transmissions over a network.

As yet another example, one or more client systems associated with a first network element (e.g., in FIG. 2B, client systems 160B1 and 160B2 associated with cell tower base station 140B) may all start downloading a particular piece of content from social-networking system 110, and also clicking on the content to mark that they "Like" it. As a result, social-networking system 110 may detect that the particular piece of content is rising in popularity, and anticipate that social connections of those users are likely to want to down the content as well. Thus, social-networking system 110 may then request that router 140A, which has a high collective social affinity score with cell tower base station 140B, pre-fetch and cache the content (or metadata that may provide information and/or notification to retrieve the uploaded content). Accordingly, because the content had been pre-fetched and cached in router 140A, the content may be distributed with greater efficiency to any of the client systems connected to router 140A that will likely request to view and/or download the content.

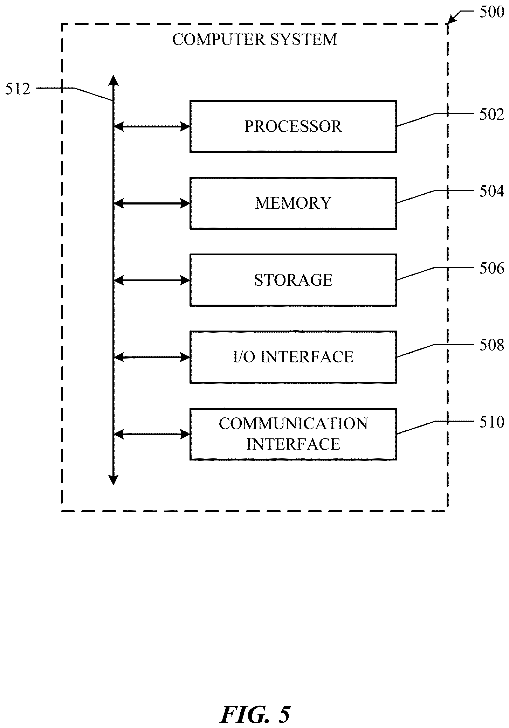

**FIG.** 5 illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). Where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure is not limited to the example embodiments described or illustrated herein. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. A method comprising:
identifying one or more first users of a social-networking system (110), wherein the first users are associated with client devices (160A1-A4) that receive and transmit data by a first network element (140A);
retrieving social graph information for each of the first users, wherein the social graph information for each of the first users comprises (1) a social affinity score for each relationship between the first user and a social-graph connection of the first user and (2) an identification of one or more second network elements (140B,140C) to which a client system (160B1,160B2,160C1,160C2) of at least one of the social-graph connections is connected;
identifying one or more pairs of network elements (140) based on the retrieved social graph information, wherein each of the pairs comprises the first network element (140A) and the at least one second network element (140B,140C);
calculating a collective social affinity score for each of the pairs of network elements (140), wherein the collective social affinity score is calculated based at least in part on the social affinity scores for a plurality of user pairs between the first users and social-graph connections of the first users; and
taking action, based on the collective social affinity score, to handle data transmissions involving the first users and the second users, wherein the taking action to handle data transmissions further comprises:
receiving, at a first network element (140A) of one of the identified pairs of network elements (140), a transmission of data by a client device (160A1-A4) connected to the first network element (140A),
wherein, when the collective social affinity score for a network element pair exceeds a specified minimum threshold, the two network elements (140) in the pair take actions to reduce latency associated with data transmissions involving client systems (160) connected to the two network elements (140),
wherein, if the social graph for a first user of a first client system (160A1-A4), which first client system (160A1-A4) is connected to the first network element (140A), includes a second user who is associated with a second client system (160B1,160B2), which second client system (160B1,160B2) is connected to the second network element (140B), and a third user who is associated with a third client system (160C1,160C2), which third client system (160C1,160C2) is connected to the third network element (140C), the first network element (140A) sends a notification to second and third network elements (140B and 140C) that content is being, has been, or will be uploaded, whereupon the second and third network elements (140B and 140C) send a request to pre-fetch and cache the uploaded content,
wherein each of the first and second network elements (140A and 140B) are a Wi-Fi router or a cell tower base station.

2. The method of claim 1, wherein the calculating the collective social affinity score for a pair of network elements comprises:
determining a set of user pairs, wherein for each of the user pairs, a client system (1600 of a first user of the user pair is connected to a first network element of the pair of network elements (140) and a client system (160) of a second user of the user pair is connected to a second network element of the pair of network elements (140); and
determining an average of the social affinity scores for each of the user pairs in the set.

3. The method of claim 2, wherein the average of the social affinity scores comprises a weighted average.

4. The method of claim 1, further comprising:
receiving the notification at the second network element (140B), and
establishing a pool of TCP connections in anticipation of peak periods when the collective social affinity score is high.

5. The method of any of claims 2 to 4, wherein the calculating the collective social affinity score takes place on a regular and continual basis.

6. One or more computer-readable non-transitory storage media embodying software that is operable when executed to perform a method according to any of claims 1 to 5.

7. A system comprising: one or more processors; and at least one memory coupled to the processors and comprising instructions executable by the processors, the processors operable when executing the instructions to perform a method according to any of the claims 1 to 5.

8. A computer program product, preferably comprising a computer-readable non-transitory storage media, that is operable when executed on a data processing system to perform a method according to any of the claims 1 to 5.

## Patentansprüche

1. Verfahren, umfassend:
Identifizieren von einem oder mehreren ersten Benutzern eines Systems für soziale Netzwerke (110), wobei die ersten Benutzer mit Client-Geräten (160A1-A4) verknüpft sind, die Daten von einem ersten Netzwerkelement (140A) empfangen und senden;
Abrufen von Sozialdiagramminformationen für jeden der ersten Benutzer, wobei die Sozialdiagramminformationen für jeden der ersten Benutzer (1) eine soziale Affinitätsbewertung für jede Beziehung zwischen dem ersten Benutzer und einer Sozialdiagrammverbindung des ersten Benutzers und (2) eine Identifikation von einem oder mehreren zweiten Netzwerkelementen (140B, 140C) umfasst, mit dem ein Client-System (160B1, 160B2, 160C1, 160C2) von mindestens einer der Sozialdiagrammverbindungen verbunden ist;
Identifizieren von einem oder mehreren Paaren von Netzwerkelementen (140) basierend auf den abgerufenen Sozialdiagramminformationen, wobei jedes der Paare das erste Netzwerkelement (140A) und das mindestens eine zweite Netzwerkelement (140B, 140C) umfasst;
Berechnen einer kollektiven sozialen Affinitätsbewertung für jedes der Paare aus Netzwerkelementen (140), wobei die kollektive soziale Affinitätsbewertung zumindest teilweise basierend auf den sozialen Affinitätsbewertungen für eine Vielzahl von Benutzerpaaren zwischen den ersten Benutzern und Sozialdiagrammverbindungen der ersten Benutzer berechnet wird; und
Handeln, basierend auf der kollektiven sozialen Affinitätsbewertung, um Datensendungen zu handhaben, die die ersten Benutzer und die zweiten Benutzer beinhalten, wobei das Handeln zum Handhaben von Datensendungen ferner umfasst:
Empfangen, an einem ersten Netzwerkelement (140A) von einem der identifizierten Paare von Netzwerkelementen (140), einer Sendung von Daten von einem Client-Gerät (160A1-A4), das mit dem ersten Netzwerkelement (140A) verbunden ist,
wobei, wenn die kollektive soziale Affinitätsbewertung für ein Netzwerkelementpaar eine angegebene Mindestschwelle übersteigt, die zwei Netzwerkelemente (140) in dem Paar handeln, um die Latenz zu reduzieren, die mit Datensendungen verknüpft ist, die Client-Systeme (160) beinhalten, die mit den zwei Netzwerkelementen (140) verbunden sind,
wobei, wenn das Sozialdiagramm für einen ersten Benutzer eines ersten Client-Systems (160A1-A4), welches erste Client-System (160A1-A4) mit dem ersten Netzwerkelement (140A) verbunden ist, einen zweiten Benutzer, der mit einem zweiten Client-System (160B1, 160B2) verknüpft ist, welches zweite Client-System (160B1, 160B2) mit dem zweiten Netzwerkelement (140B) verbunden ist, und einem dritten Benutzer, der mit einem dritten Client-System (160C1, 160C2), welches dritte Client-System (160C1, 160C2) mit dem dritten Netzwerkelement (140C) verbunden ist, umfasst, das erste Netzwerkelement (140A) eine Meldung an das zweite und das dritte Netzwerkelement (140B und 140C) sendet, dass der Inhalt gerade hochgeladen wird, wurde oder werden wird, woraufhin das zweite und das dritte Netzwerkelement (140B und 140C) eine Anfrage senden, um den hochgeladenen Inhalt vorabzurufen und im Cachespeicher zu speichern,
wobei jedes des ersten und zweiten Netzwerkelements (140A und 140B) ein Wi-Fi-Router oder eine Sendemastbasisstation ist.

2. Verfahren nach Anspruch 1, wobei das Berechnen der kollektiven sozialen Affinitätsbewertung für ein Paar von Netzwerkelementen umfasst:
Bestimmen eines Satzes von Benutzerpaaren, wobei bei jedem der Benutzerpaare ein Client-System (160) eines ersten Benutzers des Benutzerpaares mit einem ersten Netzwerkelement des Paares von Netzwerkelementen (140) verbunden ist und ein Client-System (160) eines zweiten Benutzers des Benutzerpaares mit einem zweiten Netzwerkelement des Paares von Netzwerkelementen (140) verbunden ist; und
Bestimmen eines Mittelwerts der sozialen Affinitätsbewertung für jedes der Benutzerpaare in dem Satz.

3. Verfahren nach Anspruch 2, wobei der Durchschnitt der sozialen Affinitätsbewertung einen gewichteten Mittelwert umfasst.

4. Verfahren nach Anspruch 1, ferner umfassend:
Empfangen der Meldung an dem zweiten Netzwerkelement (140B), und
Herstellen eines Pools von TCP-Verbindungen in Erwartung von Spitzenzeiten, wenn die kollektive soziale Affinitätsbewertung hoch ist.

5. Verfahren nach einem der Ansprüche 2 bis 4, wobei das Berechnen der kollektiven sozialen Affinitätsbewertung auf einer regulären und kontinuierlichen Basis stattfindet.

6. Ein oder mehrere computerlesbare nichtflüchtige Speichermedien, die Software enthalten, die, wenn sie ausgeführt wird, betrieben werden kann, um ein Verfahren nach einem der Ansprüche 1 bis 5 durchzuführen.

7. System, umfassend: einen oder mehrere Prozessoren; und mindestens einen Speicher, der mit den Prozessoren gekoppelt ist und Anweisungen umfasst, die von den Prozessoren ausgeführt werden können, wobei die Prozessoren, wenn sie die Anweisungen ausführen, betrieben werden können, um ein Verfahren nach einem der Ansprüche 1 bis 5 durchzuführen.

8. Computerprogrammprodukt, vorzugsweise umfassend ein computerlesbares nichtflüchtiges Speichermedium, das, wenn auf einem Datenverarbeitungssystem ausgeführt, betrieben werden kann, um ein Verfahren nach einem der Ansprüche 1 bis 5 durchzuführen.

## Revendications

1. Procédé comprenant :
identifier un ou plusieurs premiers utilisateurs d'un système de réseautage social (110), les premiers utilisateurs étant associés à des dispositifs de client (160A1-A4) qui reçoivent et transmettent des données par un premier élément de réseau (140A) ;
extraire des informations de graphique social pour chacun des premiers utilisateurs, les informations de graphique social pour chacun des premiers utilisateurs comprenant (1) un score d'affinité sociale pour chaque relation entre le premier utilisateur et une connexion de graphique social du premier utilisateur et (2) une identification d'un ou plusieurs seconds éléments de réseau (140B, 140C) auxquels un système de client (160B1, 160B2, 160C1, 160C2) d'au moins l'une des connexions de graphique social est connecté ;
identifier une ou plusieurs paires d'éléments de réseau (140) sur la base des informations de graphique social extraites, chacune des paires comprenant le premier élément de réseau (140A) et l'au moins un second élément de réseau (140B, 140C) ;
calculer un score d'affinité sociale collectif pour chacune des paires d'éléments de réseau (140), le score d'affinité sociale collectif étant calculé sur la base au moins en partie des scores d'affinité sociale pour une pluralité de paires d'utilisateurs entre les premiers utilisateurs et des connexions de graphique social des premiers utilisateurs ; et
passer à l'action, sur la base du score d'affinité sociale collectif, pour gérer des transmissions de données impliquant les premiers utilisateurs et les seconds utilisateurs, le passage à l'action pour gérer des transmissions de données comprenant en outre :
recevoir, au niveau d'un premier élément de réseau (140A) de l'une des paires identifiées d'éléments de réseau (140), une transmission de données par un dispositif de client (160A1-A4) connecté au premier élément de réseau (140A),
dans lequel, lorsque le score d'affinité sociale collectif pour une paire d'éléments de réseau dépasse un seuil minimal spécifié, les deux éléments de réseau (140) dans la paire passent à l'action pour réduire une latence associée à des transmissions de données impliquant des systèmes de client (160) connectés aux deux éléments de réseau (140),
dans lequel, si le graphique social pour un premier utilisateur d'un premier système de client (160A1-A4), dont le premier système de client (160A1-A4) est connecté au premier élément de réseau (140A), comprend un second utilisateur qui est associé à un second système de client (160B1, 160B2),
lequel second système de client (160B1, 160B2) est connecté au second élément de réseau (140B), et un troisième utilisateur qui est associé à un troisième système de client (160C1, 160C2), lequel troisième système de client (160C1, 160C2) est connecté au troisième élément de réseau (140C), le premier élément de réseau (140A) envoie une notification aux second et
troisième éléments de réseau (140B et 140C) selon laquelle un contenu est en train d'être, a été, ou sera téléversé, après quoi les second et troisième éléments de réseau (140B et 140C) envoient une requête pour pré-extraire et mettre en mémoire cache le contenu téléversé,
chacun des premier et second éléments de réseau (140A et 140B) étant un routeur Wifi ou une station de base de tour cellulaire.

2. Procédé selon la revendication 1, dans lequel le calcul du score d'affinité sociale collectif pour une paire d'éléments de réseau comprend :
déterminer un ensemble de paires d'utilisateurs, dans lequel pour chacune des paires d'utilisateurs, un système de client (1600) d'un premier utilisateur de la paire d'utilisateurs est connecté à un premier élément de réseau de la paire d'éléments de réseau (140) et un système de client (160) d'un second utilisateur de la paire d'utilisateurs est connecté à un second élément de réseau de la paire d'éléments de réseau (140) ; et
déterminer une moyenne des scores d'affinité sociale pour chacune des paires d'utilisateurs dans l'ensemble.

3. Procédé selon la revendication 2, dans lequel la moyenne des scores d'affinité sociale comprend une moyenne pondérée.

4. Procédé selon la revendication 1, comprenant en outre :
recevoir la notification au niveau du second élément de réseau (140B), et
établir un groupe de connexions TCP en prévision de périodes de pointe lorsque le score d'affinité sociale collectif est élevé.

5. Procédé selon l'une quelconque des revendications 2 à 4, dans lequel le calcul du score d'affinité sociale collectif a lieu sur une base régulière et continue.

6. Support(s) de stockage non transitoire(s) lisible(s) par ordinateur incorporant un logiciel qui est apte, lorsqu'il est exécuté, à effectuer un procédé selon l'une quelconque des revendications 1 à 5.

7. Système comprenant : un ou plusieurs processeurs ; et au moins une mémoire couplée aux processeurs et comprenant des instructions exécutables par les processeurs, les processeurs étant aptes, lors de l'exécution des instructions, à effectuer un procédé selon l'une quelconque des revendications 1 à 5.

8. Produit programme d'ordinateur, comprenant de préférence un support de stockage non transitoire lisible par ordinateur, qui est apte, lorsqu'il est exécuté sur un système de traitement de données, à effectuer un procédé selon l'une quelconque des revendications 1 à 5.
